# EUROPEAN PATENT SPECIFICATION

(11) **EP 4 026 469 B1**
(45) Date of publication and mention of the grant of the patent: **10.07.2024**
(21) Application number: 21210687.6
(22) Date of filing: 26.11.2021
(51) Int. Cl.: A47L 9/28, A47L 9/04

(54) **MOBILE ROBOT OPERATION CONTROL METHOD BASED ON FLOOR ENVIRONMENT SENSING AND APPARATUS THEREFOR**
VERFAHREN ZUR STEUERUNG DES BETRIEBS EINES MOBILEN ROBOTERS AUF BASIS DER BODENUMGEBUNGSERFASSUNG UND VORRICHTUNG DAFÜR
PROCÉDÉ DE COMMANDE DE FONCTIONNEMENT DE ROBOT MOBILE BASÉ SUR LA DÉTECTION D'ENVIRONNEMENT DE PLANCHER ET APPAREIL CORRESPONDANT

(30) Priority: 27.11.2020 KR 20200162460; 17.11.2021 KR 20210158830
(43) Date of publication of application: 13.07.2022
(73) Proprietor: Yujin Robot Co., Ltd., Incheon, 22013 (KR); Miele & Cie. KG, 33332 Gütersloh (DE)
(72) Inventor: Kim, Chang Soo, 22013 Incheon (KR); Moon, Byung Kwon, 04022 Seoul (KR); Park, Seong Ju, 15820 Gyeonggi-do (KR)
(74) Representative: Ellerbrächter, Dirk

(56) References cited:
- EP-A1- 3 058 860
- EP-A1- 3 335 608
- GB-A- 2 572 433
- US-A1- 2019 021 567
- US-A1- 2020 315 418

## Description

### BACKGROUND

### Field

The present invention relates to a method for sensing a floor environment and controlling an operation of a mobile robot according to a sensed floor environment mode and an apparatus therefor.

### Description of the Related Art

The contents described in this section merely provide background information on the exemplary embodiment of the present invention, but do not constitute the related art.

As a floor cleaning method of a mobile robot, most of mobile robots include a side brush which is an auxiliary cleaning module rotating to the inside of the robot in a left/right diagonal directions in front of the mobile robot, a main brush as a main cleaning module at a lower center portion of the robot, and a suction module which operates in association therewith.

The side brush which is an auxiliary cleaning module sweeps away dust which may be located outside the robot main suction module located at the bottom of the mobile robot and moves the dust to the main cleaning module and the collected dust finally moves to a dust bin by the rotating main brush which is the main cleaning module and the suction module.

Even though the cleaning modules are controlled at an operation speed set for each cleaning mode between the mobile robot operations, the cleaning modules are designed to operate irrelevant to the difference in the floor environments so that it is difficult to immediately cope with various floor environments on which the mobile robot actually operates.

That is, for more efficient cleaning performance, a maximum operation speed of each cleaning module and a traveling speed of the robot need to be actively controlled according to the floor environments between the operations of the mobile robot and to this end, the robot needs to determine the floor environment on which the robot is currently traveling. Further, a determination value for determining the floor environment may vary depending on a robot deviation, the floor environment, and a time and the robot needs to actively respond and apply such changes.

EP 3 335 608 A1 discloses a robot cleaner with a current sensor measuring the current flowing in the brush motor. The controller of the robot cleaner recognizes the floor state by comparing the measured current with a predetermined reference value.

US 2019 / 0021567 A1 discloses a measurement method for determining the correspondence between the start peak currents and stall currents of different floor brushes of a handheld vacuum cleaner. The controller of the handheld vacuum cleaner measures the start peak current of the brush motor and determines the stall current based on a comparison with preset start peak current ranges and stall currents.

EP 3 058 860 A2 discloses a method for determining a floor type through the motor current of a robot cleaner. The controller of the robot cleaner estimates the floor type based on a comparison between a measured motor current, battery voltage and motor control signals and preset probability density functions based on empirical data for each floor type and roller condition.

Even though the cleaning modules are controlled at an operation speed set for each cleaning mode between the mobile robot operations, the cleaning modules are designed to operate irrelevant to the difference in the floor environments so that it is difficult to immediately cope with various floor environments on which the mobile robot actually operates.

That is, for more efficient cleaning performance, a maximum operation speed of each cleaning module and a traveling speed of the robot need to be actively controlled according to the floor environments between the operations of the mobile robot and to this end, the robot needs to determine the floor environment on which the robot is currently traveling. Further, a determination value for determining the floor environment may vary depending on a robot deviation, the floor environment, and a time and the robot needs to actively respond and apply such changes.

### SUMMARY

A main object of the present invention is to provide a method for sensing a floor environment in which a mobile robot moves and controlling an operation of the mobile robot according to the sensed floor environment and an apparatus therefor.

According to an aspect of the present invention, in order to achieve the above-described objects, a mobile robot operation control method based on floor environment sensing includes a measured current value acquiring step of acquiring a current value measured from a motor which is equipped in a mobile robot to operate; a statistical feature value calculating step of calculating at least one statistical feature value based on the current value; a floor environment sensing step of sensing a final floor environment mode by comparing at least one statistical feature value and a predetermined determination reference value; and an operation control step of controlling an operation of the mobile robot based on a sensing result of the final floor environment mode.

According to another aspect of the present invention, in order to achieve the above-described objects, a mobile robot operation control apparatus based on floor environment sensing includes a measured current value acquiring unit which acquires a current value measured from a motor which is equipped in a mobile robot to operate; a statistical feature value calculating unit which calculates at least one statistical feature value based on the current value; a floor environment sensing unit which senses a final floor environment mode by comparing at least one statistical feature value and a predetermined determination reference value; and an operation control unit which controls an operation of the mobile robot based on a sensing result of the final floor environment mode.

Further, according to another aspect of the present invention, in order to achieve the above-described objects, a mobile robot includes at least two main wheels; a movement motor which generates a driving force to rotate the main wheels; a main brush to which at least one blade is coupled; a main brush motor which rotates the main brush; and a mobile robot operation control apparatus which acquires a current value or a voltage value measured from the main brush motor, calculates at least one feature value based on the acquired current value, senses a final floor environment mode by comparing at least one statistical feature value and a predetermined determination reference value; and transmits an operation control signal to at least one of the main brush motor and the movement motor based on the sensing result of the final floor environment mode to control the cleaning operation.

As described above, the mobile robot according to the present invention senses the floor environment in real time while traveling to optimize a cleaning operation by controlling a moving speed of the mobile robot and a cleaning module suitable therefor and increase a cleaning efficiency to the maximum.

Further, the mobile robot of the present invention actively responds to a robot deviation, the operation environment, and variables which change by an elapsed time and calculates and applies a floor environment sensing value to accurately sense the floor environment even in any situation and environment.

### BRIEF DESCRIPTION OF THE DRAWINGS

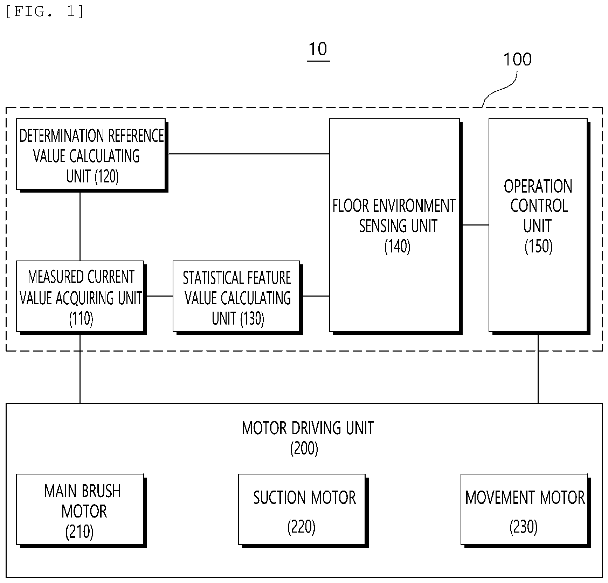

FIG. 1 is a block diagram schematically illustrating a mobile robot including a mobile robot operation control apparatus based on floor environment sensing according to an exemplary embodiment of the present disclosure;
FIG. 1 is a block diagram schematically illustrating a floor environment sensing unit of a mobile robot operation control apparatus according to an exemplary embodiment of the present disclosure;
FIGS. 3 and 4 are flowcharts for explaining a mobile robot operation control method according to an exemplary embodiment of the present disclosure;
FIG. 5 is a view illustrating a mobile robot according to an exemplary embodiment of the present disclosure;
FIGS. 6 and 7 are views for explaining a floor environment sensing operation of a mobile robot operation control apparatus according to another exemplary embodiment of the present disclosure; and
FIG. 8 is a view for explaining an operation of sensing a floor environment by correcting a measured current value based on a current offset in a mobile robot operation control apparatus according to another exemplary embodiment of the present disclosure.

### DETAILED DESCRIPTION OF THE EMBODIMENT

Hereinafter, exemplary embodiments of the present invention will be described in detail with reference to the accompanying drawings. In the description of the present invention, if it is considered that the specific description of related known configuration or function may cloud the gist of the present disclosure, the detailed description will be omitted. Further, hereinafter, exemplary embodiments of the present disclosure will be described. However, it should be understood that the technical spirit of the invention is not restricted or limited to the specific embodiments, but may be changed or modified in various ways by those skilled in the art to be carried out. Hereinafter, a mobile robot operation control method based on floor environment sensing proposed by the present invention and an apparatus therefor will be described in detail with reference to drawings.

The mobile robot of the present invention is desirably a cleaning robot, but is not necessarily limited thereto, and may be robots in various fields to which the floor environment sensing is applicable. For example, the mobile robot may be industrial robots including a household cleaning robot, a public building cleaning robot, a logistics robot, and a service robot.

FIG. 1 is a block diagram schematically illustrating a mobile robot including a mobile robot operation control apparatus based on floor environment sensing according to an exemplary embodiment of the present invention.

A mobile robot 10 according to the exemplary embodiment includes a mobile robot operation control apparatus 100 and a motor driving unit 200. The mobile robot 10 of FIG. 1 is an example so that all blocks illustrated in FIG. 1 are not essential components and in the other exemplary embodiment, some blocks included in the mobile robot 10 may be added, modified, or omitted.

The mobile robot 10 performs an operation of removing dust or foreign substances on the floor while moving a cleaning area along a predetermined cleaning route.

The mobile robot 10 according to the exemplary embodiment senses a floor environment in which the mobile robot moves during the cleaning operation to determine a floor environment mode and adjusts a driving force of at least one equipped motor according to the determined floor environment mode to control the cleaning operation.

The mobile robot 10 illustrated in FIG. 1 is provided to explain an operation of controlling an operation of a mobile robot based on the floor environment sensing so that only some components for sensing the floor environment and controlling the operation of the mobile robot may be described. In other words, in the mobile robot 10 illustrated in FIG. 1, components which are generally included in the mobile robot, such as main wheels, auxiliary wheels, main brushes, and side brushes, may be omitted.

The mobile robot operation control apparatus 100 senses a floor environment of a floor on which the mobile robot 10 moves using a current value measured from a motor equipped in the mobile robot 10 and controls a cleaning operation of the mobile robot 10 based on the sensed floor environment mode. The mobile robot operation control apparatus 100 includes a measured current value acquiring unit 110, a determination reference value calculating unit 120, a statistical feature value calculating unit 130, a floor environment sensing unit 140, and an operation control unit 150. Hereinafter, components included in the mobile robot operation control apparatus 100 will be described.

The measured current value acquiring unit 110 acquires a current value measured from a motor which is equipped in the mobile robot 10 to operate.

The measured current value acquiring unit 110 acquires the measured current value from the motor to calculate a statistical feature value in the statistical feature value calculating unit 130. The measured current value acquiring unit 110 according to the exemplary embodiment desirably acquires a current value according to a rotation operation of a main brush from a main brush motor 210 connected to the main brush of the mobile robot 10, but is not limited thereto. For example, the measured current value acquiring unit 110 may acquire a current value measured from all or some of motors of a main brush motor 210, a suction motor 220 and a movement motor 230.

In the meantime, the measured current value acquiring unit 110 acquires the measured current value from the motor to calculate a statistical feature value in the statistical feature value calculating unit 120. Here, the acquired current value may be equal to a current value acquired to calculate a statistical feature value, but is not limited thereto so that it may be a current value acquired at a different timing or at a different time.

The measured current value acquiring unit 110 acquires the current value measured from the motor for a predetermined time after starting the cleaning operation of the mobile robot to set a determination reference value.

The determination reference value calculating unit 120 calculates and sets a determination reference value to sense the floor environment mode for the floor environment. Here, the determination reference value calculating unit 120 calculates a determination reference value using a current value acquired for a predetermined time and when there is a previously calculated determination reference value, compares a newly calculated determination reference value and the previously calculated determination reference value to update the value.

The determination reference value calculating unit 120 calculates an average of current values acquired for a predetermined time and when there is no previously set determination reference value, calculates and sets the average of the current values as a determination reference value.

In the meantime, the determination reference value calculating unit 120 calculates an average of current values acquired for a predetermined time and when there is a previously calculated determination reference value, compares the average of the current values and the previously set determination reference value to adjust the determination reference value as an optimal determination reference value.

When the difference between the average of the current values acquired for a predetermined time and the previously determination reference value is equal to or higher than a predetermined threshold value, the determination reference value calculating unit 120 adjusts the determination reference value as a newly calculated optimal determination reference value.

The statistical feature value calculating unit 130 calculates at least one statistical feature value based on the current value acquired from the measured current value acquiring unit 110. Here, at least one statistical feature value may be a first statistical feature value and a second statistical feature value.

The statistical feature value calculating unit 130 calculates an average of current values acquired for a predetermined time (buffer) to calculate a first statistical feature value and calculates a standard deviation of the current values acquired for a predetermined time (buffer) to calculate a second statistical feature value.

The statistical feature value calculating unit 130 further performs an operation of comparing a current statistical feature value according to a current operation routine of the mobile robot 10 and a past statistical feature value according to a past operation routine to predict an additional load applied to the main brush due to an additional factor independent from the floor environment. Thereafter, the statistical feature value calculating unit 130 calculates a statistical feature value by excluding an error according to the predicted additional load from the acquired current value or voltage value.

A current operation routine and a past operation routine for predicting an additional load refer to an operation routine generated as a camera image or an image, a map, and a coordinate generated by a Lidar sensor. Here, the current operation routine refers to a routine after starting the current cleaning and the past operation routine refers to a routine after starting the cleaning on the previous date.

In the mobile robot 10, a load may be further generated due to an additional factor independent from the floor environment. Here, the additional factor independent from the floor environment may include foreign substances (dust or hair) present on a rotary shaft of the main brush or other structure which interrupts the rotation of the main brush due to a mechanical error. For example, when the mobile robot 10 is in use, the main brush may be covered with dust and even though the mobile robot travels on a hard floor along the same routine as the past operation routine, the load may be further generated due to the dust on the main brush.

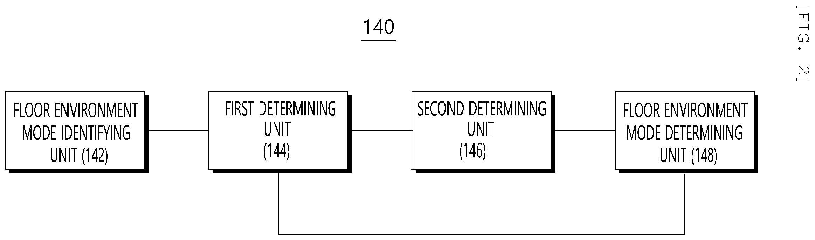

The floor environment sensing unit 140 senses a floor environment mode for the floor environment by comparing at least one statistical feature value with the determination reference value. Here, the floor environment mode may be one of a first floor environment mode and a second floor environment mode. Here, the first floor environment mode is a mode for a normal floor environment and refers to a hard floor type floor environment. Further, the second floor environment mode is a mode for a carpet floor environment and refers to a floor environment in which piles are present on a surface of a fabric. Specifically, the floor environment sensing unit 140 senses one of the first floor environment mode and the second floor environment mode by comparing the first statistical feature value and the second statistical feature value with the first determination reference value and the second determination value, respectively. The floor environment sensing unit 140 will be described in detail with reference to FIG. 2.

The operation control unit 150 controls a cleaning operation of the mobile robot based on a result of sensing the floor environment mode sensed by the floor environment sensing unit 40.

The operation control unit 150 generates an operation control signal based on the determined floor environment mode and transmits the generated operation control signal to at least one motor included in the motor driving unit 200 to control a driving force of the motor, thereby controlling the cleaning operation of the mobile robot 10.

When the floor environment mode is determined as a second floor environment mode, the operation control unit 150 increases driving forces of the main brush motor 210 and a cleaning suction motor 220 to be proportional to a floor resistance of the second floor environment mode and decreases the driving force of the movement motor 230 to be inversely proportional to the floor resistance of the second floor environment mode to control the operation of the mobile robot.

When the floor environment mode is determined as a first floor environment mode, the operation control unit 150 decreases driving forces of the main brush motor 210 and a cleaning suction motor 220 to be proportional to a floor resistance of the first floor environment mode and increases the driving force of the movement motor 230 to be inversely proportional to the floor resistance of the first floor environment mode to control the operation of the mobile robot.

The motor driving unit 220 refers to a module including at least one motor equipped in the mobile robot 10. The motor driving unit 200 may include various types of motors related to the cleaning operation of the mobile robot 10.

The motor driving unit 200 interworks with the mobile robot operation control apparatus 100 and provides operation information about at least one motor included in the motor driving unit 200 to the mobile robot operation control apparatus 100.

The operation information for each motor may include motor-on/off information, a current value for driving the motor, a motor speed of revolution (a speed of revolution per second) . The motor driving unit 200 according to the exemplary embodiment may include a main brush motor 210, a suction motor 220, and a movement motor 230.

The main brush motor 210 is a motor for rotating the main brush 510 which rotates while being in contact with the floor to effectively perform the cleaning operation of sucking dust or foreign substances of the floor and generates a driving force to rotate the main brush 510.

The main brush connected to the main brush motor 210 is implemented such that a blade formed of an elastic material or a bristle material is coupled to a cylindrical pipe. When the main brush comes into contact with the floor or the foreign substances while being rotated by the main brush motor 210, the shape of the coupled blade is deformed and then is restored to a shape before being deformed when it is separated from the floor or the foreign substances. Here, the blade coupled to the main brush may be a rubber material having a predetermined hardness, but is not necessarily limited thereto so that various materials may be applied as long as the shape of the blade can be deformed and restored.

The main brush motor 210 may transmit a current value measured for the driving force which rotates the main brush to the mobile robot operation control apparatus 100. Here, in the main brush motor 210, the measured current value may vary by the resistance which is generated when the rotating main brush comes into contact with the floor.

The main brush motor 210 adjusts the driving force to rotate the main brush 510 so as to correspond the floor environment mode sensed by the mobile robot operation control apparatus 100 based on an operation control signal received from the mobile robot operation control apparatus 100.

The suction motor 220 is connected to a suction port of the mobile robot 10 to generate a suction force to suck the dust or foreign substances.

The suction motor 220 is driven while the mobile robot 10 moves in the cleaning area according to the cleaning route set by the processor (not shown) of the mobile robot 10 so that dust or foreign substances on the floor are sucked into the suction port.

Further, the suction motor 220 adjusts the suction force to suck the dust or foreign substances so as to correspond the floor environment mode sensed by the mobile robot operation control apparatus 100 based on an operation control signal received from the mobile robot operation control apparatus 100.

The movement motor 230 is a motor for rotating main wheels 540a and 540b of the mobile robot 10 and is connected to the main wheels 540a and 540b and generates a driving force to rotate the main wheels 540a and 540b.

The movement motor 230 rotates the main wheels 540a and 540b to move the mobile robot 10 along the cleaning route set by the processor (not illustrated) of the mobile robot 10.

Further, the movement motor 230 adjusts the driving force to rotate the main wheels 540a and 540b so as to correspond the floor environment mode sensed by the mobile robot operation control apparatus 100 based on an operation control signal received from the mobile robot operation control apparatus 100.

Even though in FIG. 1, it is described that the motor driving unit 200 includes only the main brush motor 210, the suction motor 220, and the movement motor 230, the present disclosure is not necessarily limited thereto so that various types of motors related to the cleaning operation of the mobile robot 10, such as a side brush motor, may be further included.

FIG. 1 is a block diagram schematically illustrating a floor environment sensing unit of a mobile robot operation control apparatus according to an exemplary embodiment of the present disclosure.

The floor environment sensing unit 140 of the mobile robot control apparatus 100 according to the present exemplary embodiment senses a floor environment mode for the floor environment by comparing at least one statistical feature value with the determination reference value . Specifically, the floor environment sensing unit 140 senses one of the first floor environment mode and the second floor environment mode by comparing the first statistical feature value and the second statistical feature value with the first determination reference value and the second determination value, respectively.

The floor environment sensing unit 140 according to the present exemplary embodiment includes a floor environment mode identifying unit 142, a first determining unit 144, a second determining unit 146, and a floor environment mode determining unit 148. Here, the operation of sensing the floor environment mode will be described using the components in the floor environment sensing unit 140.

The floor environment mode identifying unit 142 performs an operation of identifying a currently set floor environment mode while the mobile robot operates.

The floor environment mode identifying unit 142 identifies whether the current sensed floor environment mode is a first floor environment mode or a second floor environment mode. In the meantime, when it is confirmed that there is no currently sensed floor environment mode at an initial stage of the operation of the mobile robot, the floor environment mode identifying unit 142 identifies the first floor environment mode which is a default setting mode.

The first determining unit 144 performs an operation of determining a current floor environment mode by comparing the statistical feature value and the determination reference value.

Specifically, the first determining unit 144 compares the first statistical feature value and the first determination reference value and compares the second statistical feature value and the second determination value to determine a current floor environment mode.

If the first statistical feature value is equal to or higher than the first determination reference value and the second statistical feature value is equal to or higher than the second determination value, the first determining unit 144 determines that the current floor environment is a second floor environment mode.

Further, if the first statistical feature value is lower than the first determination reference value and the second statistical feature value is lower than the second determination value, the first determining unit 144 determines that the current floor environment is a first floor environment mode.

In the meantime, if a result of comparing the first statistical feature value and the first determination reference value is different from a result of comparing the second statistical feature value and the second determination value, the first determining unit 144 determines that the current floor environment is a first floor environment mode which is a default setting mode.

The second determining unit 146 performs an additional determining operation for verifying a determination result for the current floor environment mode.

When the first determining unit 144 determines that the current floor environment mode is the second floor environment mode, the second determining unit 146 further determines the current floor environment mode based on a state maintaining time of the second floor environment mode.

When the second floor environment mode state is maintained for a predetermined maintaining time or longer, the second determining unit 146 further determines that the current floor environment mode is a second floor environment mode.

In the meantime, when the first determining unit 144 determines that the current floor environment mode is a first floor environment mode, the second determining unit 146 may omit the additional determining operation.

The floor environment mode determining unit 148 determines a final floor environment mode based on the determining result of the current floor environment mode.

When it is determined that the current floor environment mode is changed from the second floor environment mode to the first floor environment mode based on the determination result of the first determining unit 144, the floor environment mode determining unit 148 determines the first floor environment mode as a final floor environment mode to allow the operation control unit 150 to generate an operation control signal of the mobile robot 10 corresponding to the first floor environment mode.

When it is determined that the current floor environment mode is the second floor environment mode based on the determination result of the first determining unit 144 and the second determining unit 146 further determines that the second floor environment mode is maintained for a predetermined time, the floor environment mode determining unit 148 determines the second floor environment mode as a final floor environment mode to allow the operation control unit 150 to generate an operation control signal of the mobile robot 10 corresponding to the second floor environment mode.

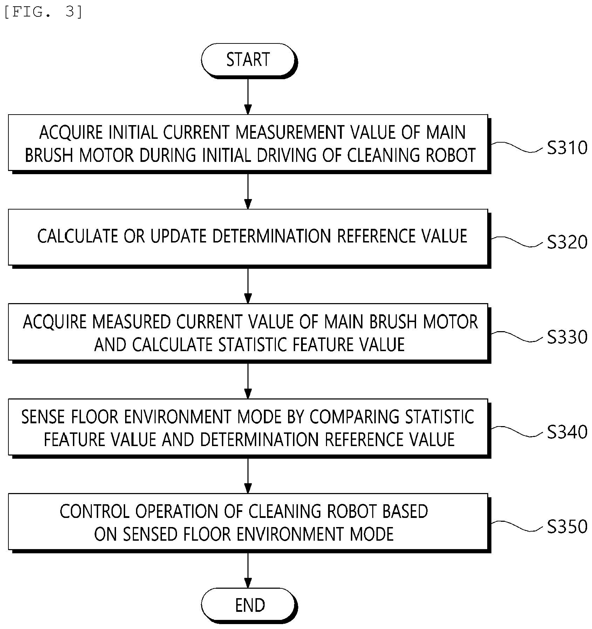

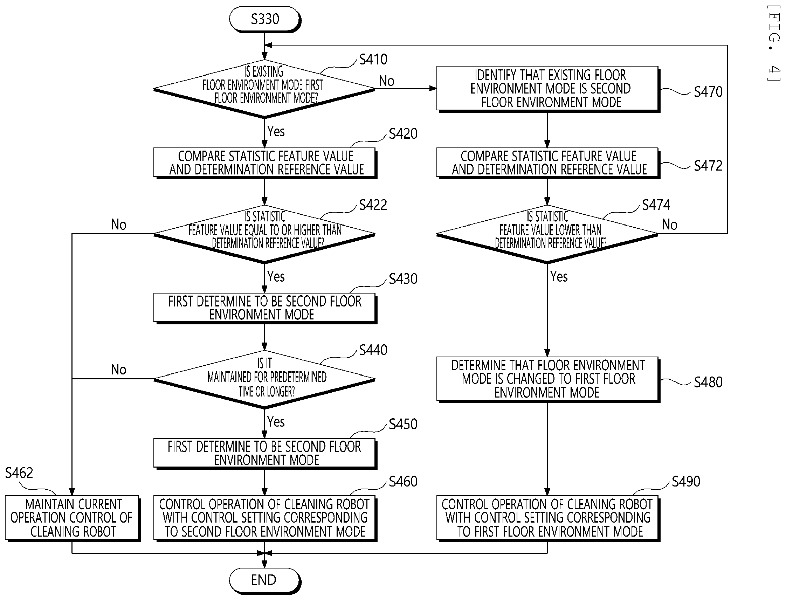

FIGS. 3 and 4 are flowcharts for explaining a mobile robot operation control method according to an exemplary embodiment of the present disclosure.

FIG. 3 is a flowchart illustrating a method of controlling a mobile robot operation in a mobile robot operation control apparatus 100 according to an exemplary embodiment of the present disclosure.

The mobile robot operation control apparatus 100 acquires an initial current value of a main brush motor during an initial operation of the mobile robot 10 in step S310. The mobile robot operation control apparatus 100 may acquire an initial current value measured from a main brush motor for a predetermined time after starting the cleaning operation of the mobile robot 10 to set a determination reference value.

The mobile robot operation control apparatus 100 calculates and sets a determination reference value using the acquired initial current value or updates an existing determination reference value in step S320.

The mobile robot operation control apparatus 100 calculates an average of current values acquired for a predetermined time and when there is no previously set determination reference value, calculates and sets the average of the current values as a determination reference value.

In the meantime, the mobile robot operation control apparatus 100 calculates an average of current values acquired for a predetermined time and when there is a previously calculated determination reference value, compares the average of the current value and the previously set determination reference value to update the determination reference value to an optimal determination reference value. Specifically, when the difference between the average of the current value acquired for a predetermined time and the previously determination reference value is equal to or higher than a predetermined threshold value, the mobile robot operation control apparatus 100 updates the determination reference value to a newly calculated optimal determination reference value.

The mobile robot operation control apparatus 100 acquires a current value of the main brush motor and calculates a statistical feature value based on the acquired current value in step S330.

It is desirable that the mobile robot operation control apparatus 100 acquires a current value according to the rotating operation of the main brush from the main brush motor connected to the main brush of the mobile robot 10, but it is not necessarily limited thereto. For example, the mobile robot operation control apparatus 100 may acquire a current value measured from all or some of motors of a main brush motor, a suction motor, and a movement motor.

The mobile robot operation control apparatus 100 calculates at least one statistical feature value based on the acquired current value. The mobile robot operation control apparatus 100 calculates an average of current values acquired for a predetermined time (buffer) to calculate a first statistical feature value and calculates a standard deviation of the current values acquired for a predetermined time (buffer) to calculate a second statistical feature value.

The mobile robot operation control apparatus 100 sense the floor environment modes by comparing the statistical feature value and the determination reference value in step S340.

The mobile robot operation control apparatus 100 compares the first statistical feature value and the second statistical feature value with the first determination reference value and the second determination value, respectively, to sense one of the first floor environment mode and the second floor environment mode. Here, the floor environment mode may be one of the first floor environment mode and the second floor environment mode. Here, the first floor environment mode is a mode for a normal floor environment and refers to a hard floor type floor environment. Further, the second floor environment mode is a mode for a carpet floor environment and refers to a floor environment in which piles are present on a surface of a fabric.

The mobile robot operation control apparatus 100 controls the cleaning operation of the mobile robot 10 based on the sensed floor environment mode in step S350.

The mobile robot operation control apparatus 100 generates an operation control signal based on the sensed floor environment mode and transmits the generated operation control signal to at least one motor equipped in the mobile robot 10 to control the driving force of the motor, thereby controlling the cleaning operation of the mobile robot 10.

FIG. 4 is a flowchart for specifically explaining steps S340 and S350 of FIG. 3.

The mobile robot operation control apparatus 100 identifies a previously sensed floor environment mode in step S410.

When as an identifying result of step S410, it is identified that the previously sensed floor environment mode is the first floor environment mode, the mobile robot operation control apparatus 100 performs an operation for changing a mode. In the meantime, when it is confirmed that there is no previously sensed floor environment mode (an initial operation of the mobile robot), the mobile robot operation control apparatus 100 identifies that it is the first floor environment mode which is a default setting mode.

The mobile robot operation control apparatus 100 compares the statistical feature value and the determination reference value in step S420.

When the statistical feature value is equal to or higher than the determination reference value in step S422, the mobile robot operation control apparatus 100 performs first determination that it is a second floor environment mode in step S430. If the first statistical feature value is equal to or higher than the first determination reference value and the second statistical feature value is equal to or higher than the second determination value, the mobile robot operation control apparatus 100 determines that the current floor environment is a second floor environment mode.

In the meantime, when the statistical feature value is lower than the determination reference value in step S422, the mobile robot operation control apparatus 100 maintains a current operation control state of the mobile robot in step S462.

After the step S430, the mobile robot operation control apparatus 100 determines whether the state of the second floor environment mode is maintained for a predetermined threshold time or longer in step S440.

When the second floor environment mode is maintained for a predetermined threshold time or longer, the mobile robot operation control apparatus 100 secondarily determines (additionally determines) that the current floor environment mode is the second floor environment mode in step S450.

In the meantime, when the second floor environment mode is not maintained for a predetermined threshold time or longer in step S440, the mobile robot operation control apparatus 100 maintains a current operation control state of the mobile robot in step S462.

After the step S450, the mobile robot operation control apparatus 100 controls an operation of the mobile robot 10 by a control setting corresponding to the second floor environment mode in step S460.

When the final floor environment mode is determined as a second floor environment mode, the mobile robot operation control apparatus 100 transmits an operation control signal which increases driving forces of the main brush motor and the cleaning suction motor to be proportional to a floor resistance of the second floor environment mode and decreases the driving force of the movement motor to be inversely proportional to the floor resistance of the second floor environment mode to each motor to control the operation of the mobile robot.

When as an identifying result of step S410, it is identified that the previously sensed floor environment mode is the second floor environment mode in step S470, the mobile robot operation control apparatus 100 performs an operation for returning a mode.

The mobile robot operation control apparatus 100 compares the statistical feature value and the determination reference value in step S472.

When the statistical feature value is lower than the determination reference value in step S474, the mobile robot operation control apparatus 100 determines that the second floor environment mode is changed to the first floor environment mode in step S480. If the first statistical feature value is lower than the first determination reference value and the second statistical feature value is lower than the second determination value, the mobile robot operation control apparatus 100 determines that the current floor environment is a first floor environment mode.

In the meantime, when the statistical feature value is equal to or higher than the determination reference value in step S422, the mobile robot operation control apparatus 100 returns to the step S410 to perform an operation of identifying an existing environment mode.

After the step S480, the mobile robot operation control apparatus 100 controls an operation of the mobile robot 10 by a control setting corresponding to the first floor environment mode in step S490.

When the final floor environment mode is determined as a first floor environment mode, the mobile robot operation control apparatus 100 transmits an operation control signal which decreases driving forces of the main brush motor and the cleaning suction motor to be proportional to a floor resistance of the first floor environment mode and increases the driving force of the movement motor to be inversely proportional to the floor resistance of the first floor environment mode to each motor to control the operation of the mobile robot.

Even though in FIGS. 3 and 4, it is described that the steps are sequentially executed, the present disclosure is not necessarily limited thereto. In other words, the steps described in FIGS. 3 and 4 may be modified to be executed or one or more steps may be executed in parallel so that FIGS. 3 and 4 are not limited to a time-sequential order.

The mobile robot operation control method according to the exemplary embodiment described in FIGS. 3 and 4 may be implemented by an application (or a program) and may be recorded in a terminal (or computer) readable recording media. The recording medium which has the application (or program) for implementing the mobile robot operation control method according to the exemplary embodiment recorded therein and is readable by the terminal device (or a computer) includes all kinds of recording devices or media in which computing system readable data is stored.

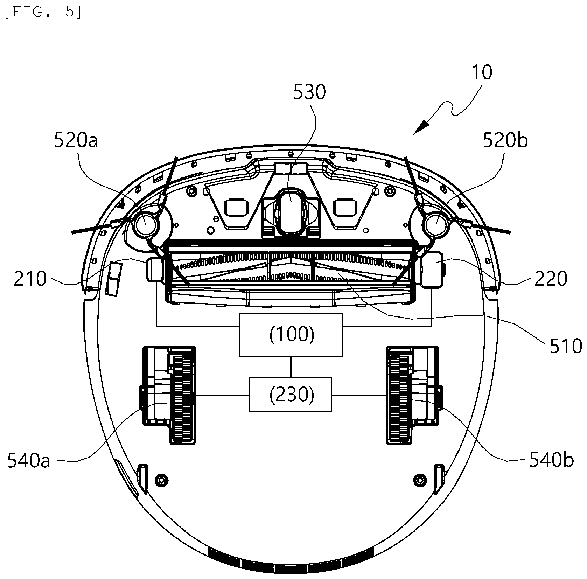

FIG. 5 is a view illustrating a mobile robot according to an exemplary embodiment of the present disclosure.

A mobile robot 10 according to the present exemplary embodiment includes a main brush 510, a main brush motor 210 connected to the main brush 510, side brushes 520a and 520b which move dust and foreign substances on the floor to the main brush 510, a suction motor for a cleaning operation to suck the dust or foreign substances on the floor, a movement motor 230 which drives main wheels 540a and 540b and an auxiliary wheel 530 to move the mobile robot 10, and a mobile robot operation control apparatus 100 which senses a floor environment and controls the main brush motor 210, the suction motor 220, and the movement motor 230 of the mobile robot 10 according to the sensed floor environment mode.

The mobile robot operation control apparatus 100 performs a floor environment sensing operation of the mobile robot 10 using the main cleaning module.

The mobile robot operation control apparatus 100 utilizes the current value acquired from the motor connected to the main brush which is a main cleaning module during the cleaning to determine whether the floor which is being currently cleaned is a first floor environment mode (hard floor) or a second floor environment mode (carpet).

The mobile robot operation control apparatus 100 suggests a method to efficiently clean by controlling a cleaning module suitable for the determined floor environment mode and a movement speed between the cleaning operations.

Further, the mobile robot operation control apparatus 100 performs an operation for updating a determination value for sensing the floor environment in real time.

In the mobile robot operation control apparatus 100, as the current value acquired from the motor connected to the main brush which is a main cleaning module, all the mobile robots cannot use the same determination value due to a deviation generated in the robot according to characteristics of the motor and the main brush, a deviation due to the main brush which may be worn according to the usage time, and the floor environment, which may significantly affect the sensing result which senses the floor environment by utilizing the current value.

With regard to this, the mobile robot operation control apparatus 100 proposes a method of actively calculating and applying a determination value for determining a floor environment during the cleaning, so as to respond to the deviation for every mobile robot, the usage time, and the deviation according to the floor environment.

In other words, the mobile robot operation control apparatus 100 proposes a method for recognizing a floor environment using information acquired from the motor connected to the main brush which is a main cleaning module during the cleaning of the mobile robot 10 to actively control a cleaning module appropriate for the floor environment and control a movement speed during the cleaning. Further, the mobile robot operation control apparatus 100 proposes a method of updating a determination value for sensing the floor environment which may significantly affect the operation of sensing the floor, in real time, and using the same.

The mobile robot operation control apparatus 100 proposes a differentiating method of a method of allowing the mobile robot 10 to actively sense the floor environment using information acquired from the main brush module of the mobile robot 10, that is, the main brush motor 210 and control a cleaning mode (a speed and a suction module power) suitable therefor and a method of allowing a robot to actively calculate a determination value for sensing the floor environment and apply the determination value in real time.

Hereinafter, an operation of sensing a floor environment in the mobile robot operation control apparatus 100 will be described. Here, the operation of sensing a floor environment in the mobile robot operation control apparatus 100 may correspond to the configurations such as the measured current value acquiring unit 110, the statistical feature value calculating unit 130, the floor environment sensing unit 140, and the operation control unit 150.

The mobile robot operation control apparatus 100 acquires different current values according to each floor environment by the main brush which rotates during the operation of the mobile robot. The mobile robot operation control apparatus 100 acquires different current values according to the resistance applied to the main brush by the floor environment while the mobile robot 10 travels. Generally, in the general floor environment (hereinafter, referred to as a first floor environment mode), a current value which is almost uniform and a current value which is lower than that during the traveling in a specific floor environment (hereinafter, referred to as a second floor environment mode) are acquired.

In the second floor environment mode, the mobile robot 10 travels to be slightly buried in the carpet floor environment and thus a resistance of the rotating main brush against a carpet pile is increased so that the mobile robot operation control apparatus 100 acquires a current value higher than that in the first floor environment mode.

The mobile robot operation control apparatus 100 according to the present exemplary embodiment uses a current value measured in the motor of the main brush which is clearly distinguished by the difference in the driving environment and the floor environment as the determination condition for sensing the floor environment and the mobile robot 10 may control the cleaning speed and the cleaning module appropriate for the environment according th the floor environment determined as described above to have a higher cleaning performance.

An operation of sensing a floor environment in the mobile robot operation control apparatus 100 is as follows.

The mobile robot operation control apparatus 100 uses the following two current value information (hereinafter, referred to as statistical feature values) to distinguish and sense the first floor environment mode and the second floor environment mode using the main brush current value.
1) First statistical feature value (avg_cur): Average of main brush current
2) Second statistical feature value (std_cur): Standard deviation of main brush current

The first statistical feature value avg_cur is an average of current values of the main brush motor (main brush motor current) acquired for a predetermined time (buffer) and is basically used based on the difference in the current values acquired in the first floor environment mode and the second floor environment mode.

The second statistical feature value std_cur is a standard deviation of current values of the main brush motor (main brush motor current) acquired for a predetermined time (buffer) and is basically used based on the difference in the current values acquired from the first floor environment mode and the second floor environment mode.

Here, it is assumed that in the first floor environment mode, the statistical feature value lower than that in the second floor environment mode is calculated and in the second floor environment mode, the statistical feature value higher than that in the first floor environment mode is calculated.

The mobile robot operation control apparatus 100 identifies whether the environment in which the mobile robot 10 is traveling is the first floor environment mode or the second floor environment mode, based on the first statistical feature value and the second statistical feature value, which is represented by the conditional statement of Table 1.

**[Table 1]**

| |
|---|
| ```
if ( std_cur >= THRESHOLD_BRUSH_CUR_STD ∥ avg_cur >=
   THRESHOLD_BRUSH_CUR_AVG*0.X )
   {
     maybe_robot_is_on_the_carpet++; }
``` |

In Table 1, the first determination reference value THRESHOLD_BRUSH_CUR_AVG and the second determination reference value THRESHOLD_BRUSH_CUR_STD are threshold values acquired and identified during the actual operation of the mobile robot. The second determination reference value is applied by statistically applying the second statistical feature value acquired during the operation in the first floor environment mode from a plurality of mobile robots and the first determination reference value may be differently applied according to the type of the second floor environment mode to be sensed or may be updated in real time by the robot.

Further, the reason for multiplying the first determination reference value by "0.X" is a minimum condition to verify whether the mobile robot is traveling in the second floor environment mode. When the value of maybe_robot_is_on_the_carpet reaches a predetermined value or higher by the corresponding condition, an additional conditional statement for confirming the traveling in the second floor environment mode is used. When the value of maybe_robot_is_on_the_carpet reaches a predetermined value or higher, the conditional statement for verifying whether the mobile robot is actually traveling in the second floor environment mode may be represented by Table 2.

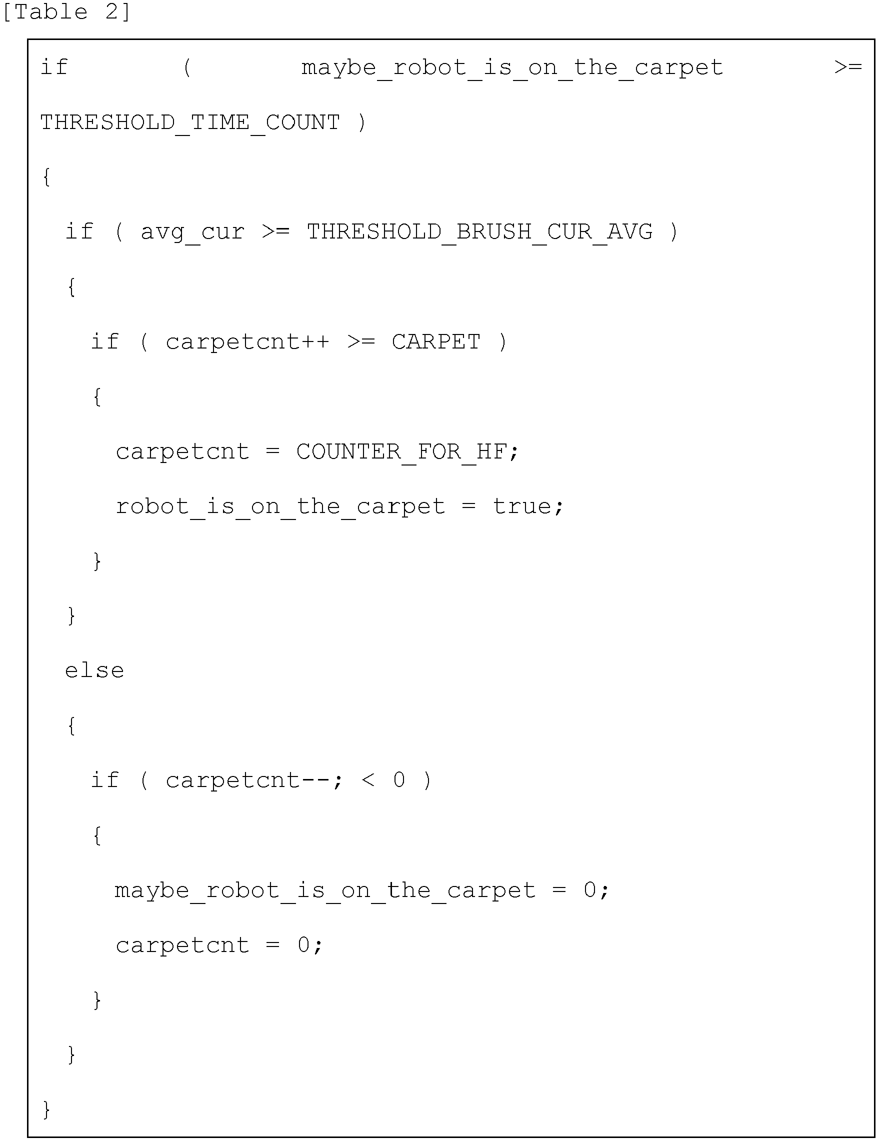

In Table 2, when the condition is continued for a predetermined time or longer, an additional variable is used to finally confirm that the mobile robot 10 is traveling in the second floor environment mode. This is to cope with the case where the first statistical feature value (avg_cur) is momentarily measured to be lower than the first determination reference value (THRESHOLD_BRUSH_CUR_AVG) due to hopping due to surface curvature in the second floor environment mode during the robot traveling.

Further, when it is confirmed that the mobile robot is traveling in the second floor environment mode, a specific value COUNTER_FOR_HF is allocated to carpetcnt value and then is used as a value (count) to confirm the corresponding state when the second floor environment mode is switched to the first floor environment mode.

When the mobile robot moves from the first floor environment mode to the second floor environment mode, it is sensed by the above-mentioned condition and when the mobile robot moves from the second floor environment mode to the first floor environment mode, it is sensed by the condition represented in Table 3.

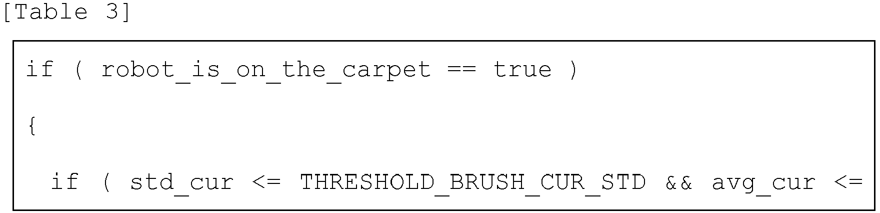

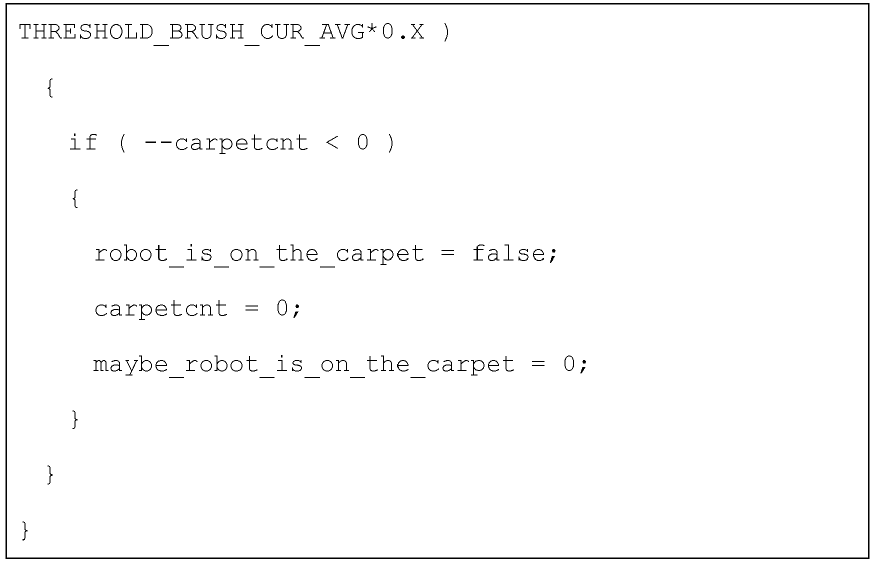

The mobile robot operation control apparatus 100 controls the moving speed and the cleaning module operation according to the result of sensing the sensed floor environment mode as follows.

During the traveling in the second floor environment mode, the mobile robot needs to have a relatively high cleaning efficiency to better suck dust and foreign substances buried in the carpet. Therefore, as the floor environment sensing result, it is sensed as a second floor environment mode, the mobile robot operation control apparatus 100 lowers the movement speed of the mobile robot and increases a power of the suction motor to have a higher cleaning performance. Further, during the traveling in the first floor environment mode, the mobile robot operation control apparatus 100 controls the speed and the suction motor power of the mobile robot to be restored to the existing speed and suction motor power to efficiently control the cleaning performance and the maintaining time suitable for the floor situation.

Hereinafter, an operation of calculating and updating the determination reference value in the mobile robot operation control apparatus 100 will be described. Here, the operation of calculating the determination reference value in the mobile robot operation control apparatus 100 may correspond to the configuration of the determination reference value calculating unit 120.

The mobile robot operation control apparatus 100 needs to calculate and update the determination reference value for sensing the floor environment for the following reason.

Between the first statistical feature value avg_cur and the second statistical feature value std_cur used for the floor sensing operation, the second statistical feature value std_cur is not relatively dependent on the mobile robot so that statistic value of data acquired from the plurality of mobile robots may be used as a fixed constant value.

However, the first statistical feature value avg_cur may have different values for mobile robots. The first statistical feature value is obtained by a tolerance which is inherent by the motor related to the main brush or a shape of the main brush so that all the mobile robots cannot have a unified first statistical feature value avg_cur.

The first statistic value avg_cur to be measured may vary according to the first floor environment mode in which the mobile robot operates and the changes in the internal factors such as the blade of the main brush which is worn over the usage time, an internal gear of the main brush module, and a motor connected to the main brush, which means that the fixed constant value such as the second statistical feature value std_cur cannot be applied to all the mobile robot.

Therefore, the mobile robot operation control apparatus 100 calculates a determination reference value for sensing the floor environment in real time. The real-time calculation of the determination reference value is basically applied by acquiring an average of the current values of the main brush motor acquired during the traveling of the mobile robot in the first floor environment mode under a specific condition and then comparing the result value and the existing determination reference value.

The current value of the main brush motor acquired to determine a new determination reference value needs to be acquired during the traveling operation of the mobile robot when the current change is minimized, so that this is desirably a situation in which the mobile robot basically straightly travels.

When the average of the current values acquired in the condition/environment in which the change in the current value of the main brush motor is minimized is accumulated N times or more (N is a natural number of 2 or larger), the mobile robot operation control apparatus 100 calculates an average thereto and then compares the average with the existing determination value.

At this time, when a deviation (difference) between the new determination reference value and the existing determination reference value is ±10% or larger, the new determination reference value is readjusted to be applied. This is to prevent an erroneous floor environment sensing determination reference value from being applied, by applying too large deviation according to the floor environment or the state of the main brush.

Further, when the new determination value is applied, a minimum/maximum limited value is provided to prevent the erroneous determination value from being applied and at this time, as the minimum/maximum limited value, a minimum/maximum average acquired from a plurality of mobile robots may be applied. Here, the minimum/maximum limited value is a minimum/maximum value to surely sense the floor environment (carpet) to be sensed and may vary depending to a floor sensing target, which may be applied by the simplified condition and a calculating equation as represented in Table 4.

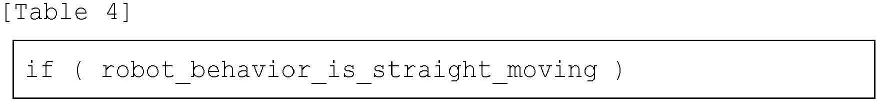

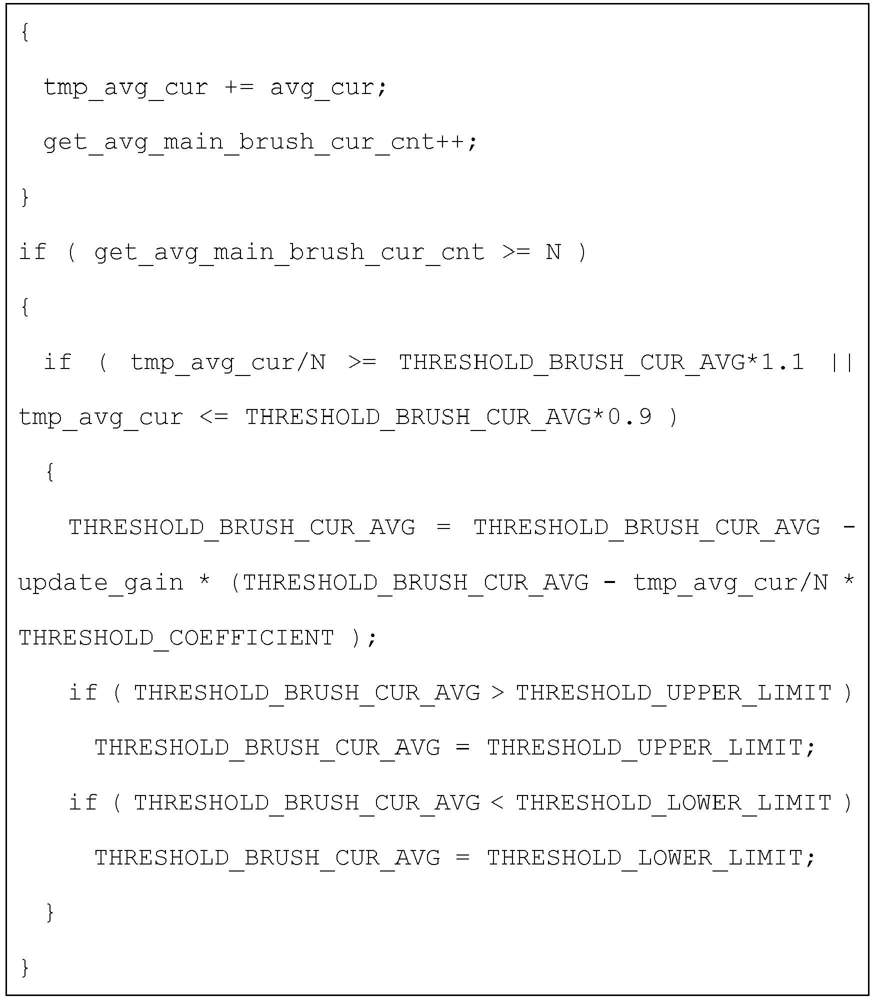

In the conditional statement and the calculating equation in Table 4, update_gain and TTHRESHOLD_COEFFICIENT value may be applied as a current value of the main brush motor equipped in the mobile robot and a value optimized according to the floor (carpet) environment, which are desirably fixed constant values.

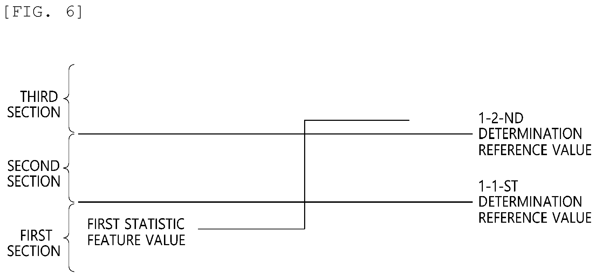

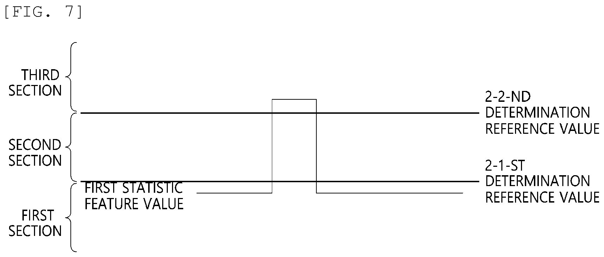

FIGS. 6 and 7 are views for explaining a floor environment sensing operation of a mobile robot operation control apparatus according to another exemplary embodiment of the present disclosure.

The mobile robot operation control apparatus 100 determines a state of the current floor environment by comparing a first determination reference set by a 1-1-st determination reference value and a 1-2-nd determination reference value and the first statistical feature value and comparing a second determination reference set by a 2-1-st determination reference value and a 2-2-nd determination reference value and the second statistical feature value.

FIG. 6 is an exemplary view for explaining an operation of comparing a first determination reference set by a 1-1-st determination reference value and a 1-2-nd determination reference value and the first statistical feature value and FIG. 7 is an exemplary view for explaining an operation of comparing a second determination reference set by a 2-1-st determination reference value and a 2-2-nd determination reference value and the second statistical feature value.

Referring to FIG. 6, the mobile robot operation control apparatus 100 may divide a first section, a second section, and a third section for the first determination reference using the 1-1-st determination reference value and the 1-2-nd determination reference value. Here, the 1-1-st determination reference value is desirably smaller than the 1-2-nd determination reference value.

In the first determination reference, the first section corresponds to the first floor environment mode (hard floor) section and the second section corresponds to a determination holding section. Further, in the first determination reference, the third section corresponds to the second floor environment mode (carpet floor environment).

The mobile robot operation control apparatus 100 may set the 1-1-st determination reference value and the 1-2-nd determination reference value using the first determination reference value. For example, the mobile robot operation control apparatus 100 may determine the 1-1-st determination reference value with the same value as the first determination reference value and add a predetermined threshold value to the first determination reference value to determine the 1-2-nd determination reference value.

Referring to FIG. 7, the mobile robot operation control apparatus 100 may divide a first section, a second section, and a third section for the second determination reference using the 2-1-st determination reference value and the 2-2-nd determination reference value. Here, the 2-1-st determination reference value is desirably smaller than the 2-2-nd determination reference value.

In the second determination reference, the first section corresponds to the section for maintain a floor environment and the second section corresponds to a determination holding section. Further, in the second determination reference, the third section corresponds to a section in which the floor environment changes.

The mobile robot operation control apparatus 100 may set the 2-1-st determination reference value and the 2-2-nd determination reference value using the first determination reference value. For example, the mobile robot operation control apparatus 100 may determine the 2-1-st determination reference value with the same value as the first determination reference value and add a predetermined threshold value to the second determination reference value to determine the 2-2-nd determination reference value.

The mobile robot operation control apparatus 100 finally determines the floor environment mode based on the first determination result section for the first determination reference using the 1-1-st determination reference value and the 1-2-nd determination reference value and the second determination result section for the second determination reference using the 2-1-st determination reference value and the 2-2-nd determination reference value.

When both the first determination result section and the second determination result section correspond to the third section, the mobile robot operation control apparatus 100 determines that the first floor environment mode is changed to the second floor environment mode and controls the cleaning operation of the mobile robot for the changed floor environment.

When the first determination result section corresponds to the third section and the second determination result section corresponds to the second section, the mobile robot operation control apparatus 100 holds the determination for the changed floor environment and when the corresponding section is maintained for a predetermined time, determines that it is a boundary area in which the floor environment is changed and controls the cleaning operation of the mobile robot for the boundary area.

In the meantime, when the first determination result section corresponds to the second section, the mobile robot operation control apparatus 100 holds the determination for the floor environment change.

When a determination holding state in which the first determination result section corresponds to the second section is continued for a predetermined time, the mobile robot operation control apparatus 100 determines whether the measured current value is increased due to an external factor, based on history data. Here, the history data may include a previously stored cleaning map (for example, a camera image or a map generated by a Lidar sensor) and flood environment mode information about at least one point set in the cleaning map.

When the first determination result section for the current floor environment for the same cleaning point is determined to be different from that in the past based on the history data, for example, the determination result section is the first section in the past, but is currently the second section, the mobile robot operation control apparatus 100 determines that the measured current value is increased due to external factors such as foreign substance jamming (for example, jamming of dusts, hair, and obstacle) to control the operation of the mobile robot to issue a message such as error notification.

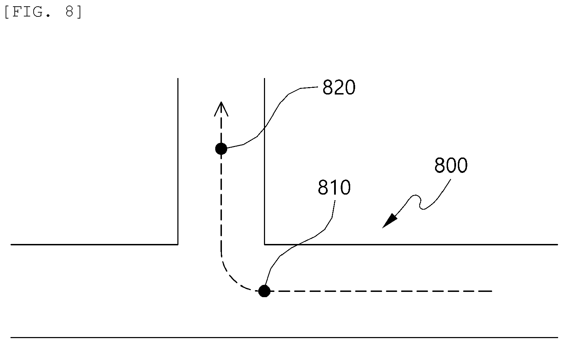

FIG. 8 is a view for explaining an operation of sensing a floor environment by correcting a measured current value based on a current offset in a mobile robot operation control apparatus according to another exemplary embodiment of the present disclosure.

Referring to FIG. 8, the mobile robot operation control apparatus 100 calculates a current offset for an additional load which is applied to the main brush due to an independent addition factor from the floor environment and calculates a statistical feature value based on a corrected current value calculated by subtracting the current offset from the measured current value measured from the motor which is equipped in the mobile robot 10 to operate. Here, even though it is described that the mobile robot operation control apparatus 100 calculates the current offset for the current value, if the measured value is a voltage value, a voltage offset is calculated to calculate a corrected voltage value.

The mobile robot operation control apparatus 100 sets an initialization setting state to calculate the current offset. Here, the initialization setting state refers to a setting state in which the influence by the foreign substances or the failure is minimized and a new product state or a state after cleaning the inside of the mobile robot may be defined as the initialization setting state. However, it is not easy for the mobile robot operation control apparatus to constantly set the initialization setting state based on the inside cleaning state which is intermittently performed so that when the current value of the traveling mobile robot 10 is maintained below a predetermined reference (for example, the first determination reference value) or a distribution pattern of the current value is observed to be lower than the traveling of the last cleaning operation, it may be defined as the initialization setting state. Here, the initialization setting state may be a reference related to the current offset calculation to be described below.

Thereafter, the mobile robot operation control apparatus 100 may calculate the difference in the current values as a first current offset by comparing map additional information in a first anchor point 810 in the previously stored cleaning map. Here, the first current offset refers to a difference in the current values in the previous traveling and the current traveling of the first anchor point 810..

Further, the mobile robot operation control apparatus 100 may calculate the difference in the current values as a second current offset by comparing map additional information in a second anchor point 820 in the previously stored cleaning map. Here, the second current offset refers to a difference in the current values in the previous traveling and the current traveling of the second anchor point 820.

The first anchor point and the second anchor point are points extracted using the previously stored map information and refer to points corresponding to a position on a current routine similar to a position on the past moving routine. The cleaning map refers to a map generated based on information acquired from the camera image or the Lidar sensor and the map additional information refers to an environment sensor value (for example, a current value, a voltage value, and a statistical feature value) acquired at points which form the cleaning map.

The mobile robot operation control apparatus 100 may calculate any one value selected from the current offsets or an average value thereof as a final current offset.

The mobile robot operation control apparatus 100 may perform a determination operation of determining a floor environment mode by applying a corrected current value obtained by subtracting the final current offset from the measured current value acquired in the current routine.

In the meantime, the mobile robot operation control apparatus 100 may cumulatively store the current offsets at every predetermined period to calculate an accumulated current offset. Here, the predetermined period may be set to three weeks, one month, or two months.

When the accumulated current offsets obtained by accumulating the current offsets calculated for a predetermined time period for every anchor point exceeds a predetermined reference (for example, a predetermined threshold value), the mobile robot operation control apparatus 100 may determine that the mobile robot 10 is in a malfunction state.

When the accumulated current offset is identified to have a pattern which gradually increases (an increasing pattern below a predetermined increased amount), the mobile robot operation control apparatus 100 may predict that the failure is caused by the foreign substances which are consistently generated, such as dust and hair.

When the accumulated current offset is identified to have a pattern which sharply increases (an increasing pattern above a predetermined increased amount), the mobile robot operation control apparatus 100 may predict that the failure is caused by a predetermined external impact or an internal failure.

The mobile robot operation control apparatus 100 may estimate whether the failure is caused by the accumulated foreign substances or the impact by analyzing the change in the pattern of the accumulated current offset.

According to another exemplary embodiment of the present disclosure, the mobile robot operation control apparatus of the present disclosure may further include a learning unit (not illustrated) which extracts a floor environment feature value from a sensor value according to the floor environment. The learning unit may be implemented by an artificial neural network including an input layer, a hidden layer, and an output layer. Each layer includes a plurality of nodes and the nodes between adjacent layers may be implemented to be connected according to a determination weight which has been trained in advance by training data. Further, the mobile robot operation control apparatus may further include a pre-processing unit which pre-processes a sensor value. For example, the pre-processing unit receives a current signal according to an intensity of the current acquired in the unit of predetermined time intervals, samples the current signal at a predetermined sampling period, and converts the sampled value into a vector-matrix value to be processible in the learning unit.

Further, a current value in the acceleration/deceleration section, such as the section where the mobile robot changes a direction or the section where an obstacle is detected, observed under the condition of no load on the floor and a current value in the constant-velocity section that moves at a constant speed may have different patterns. In the present exemplary embodiment, a current value of the motor which is substantially observed in a no-load state is defined as a reference current value for every traveling mode. The floor environment feature value is desirably a feature value obtained with a reference subtracted current value obtained by subtracting a reference current value for every traveling mode from the observed current value as an input of the learning unit. By doing this, the deviation of the motor load according to the traveling mode is excluded so that the floor environment may be more precisely sensed. In the present exemplary embodiment, when the floor environment sensing unit determines the floor environment, the floor environment feature value obtained by the learning unit is further considered to determine the floor environment in which the moving robot is currently located.

It will be appreciated that various exemplary embodiments of the present disclosure have been described herein for purposes of illustration, and that various modifications and changes may be made by those skilled in the art without departing from the scope of the present invention. Accordingly, the exemplary embodiments of the present disclosure are not intended to limit but describe the technical scope of the present invention.

The protective scope of the exemplary embodiment of the present invention should be construed based on the following claims, and all the technical concepts in the equivalent scope thereof should be construed as falling within the scope of the exemplary embodiment of the present invention.

## Claims

1. A method for controlling an operation of a mobile robot (10) based on floor environment sensing in a mobile robot operation control apparatus (100), comprising:
a measured current value acquiring step of acquiring a current value or a voltage value measured from a motor (210, 220, 230) which is equipped in a mobile robot (10) to operate;
a statistical feature value calculating step of calculating at least one statistical feature value based on the current value or the voltage value;
a floor environment sensing step of sensing a final floor environment mode by comparing at least one statistical feature value and a predetermined determination reference value; and
an operation control step of controlling an operation of the mobile robot (10) based on a sensing result of the final floor environment mode,
**characterized in that**,
in the statistical feature value calculating step, an additional load applied to the main brush (510) due to an additional factor independent from the floor environment is predicted by comparing a current statistical feature value according to a current operation routine of the mobile robot (10) and a past statistical feature value according to a past operation routine and a statistical feature value is calculated by excluding an error according to the predicted additional load from the acquired current value or voltage value.

2. The mobile robot operation control method according to claim 1, wherein in the measured current value acquiring step, the current value or the voltage value in accordance with the rotating operation of the main brush (510) is acquired from the motor (210) connected to a main brush (510) of the mobile robot (10).

3. The mobile robot operation control method according to claim 2, wherein in the statistical feature value calculating step, a first statistic value is calculated by calculating an average of the current value or the voltage value acquired for a predetermined time (buffer) and a second statistic value is calculated by calculating a standard deviation of the current value or the voltage value acquired for the predetermined time (buffer).

4. The mobile robot operation control method according to claim 3, wherein in the floor environment sensing step, the first statistical feature value and the second statistical feature value are compared with the first determination reference value and the second determination value, respectively, to sense one of the first floor environment mode and the second floor environment mode.

5. The mobile robot operation control method according to claim 4, wherein the floor environment sensing step includes:
a floor environment mode identifying step of identifying a currently set floor environment mode during the operation of the mobile robot (10);
a first determining step of determining a current floor environment mode by comparing the first statistical feature value with the first determination reference value and comparing the second statistical feature value with the second determination value; and a floor environment mode determining step of determining a final floor environment mode based on the determination result.

6. The mobile robot operation control method according to claim 4, wherein when in the floor environment mode identifying step, the currently set floor environment is a first floor environment, in the first determining step, if the first statistical feature value is equal to or higher than the first determination reference value and the second statistical feature value is equal to or higher than the second determination value, it is determined that the current floor environment is a second floor environment mode.

7. The mobile robot operation control method according to claim 1, further comprising:
a second determining step of additionally determining the current floor environment mode based on a state maintaining time of the second floor environment mode when the current floor environment is determined as a second floor environment mode, wherein in the second determining step, if it is determined that the second floor environment mode is maintained for a predetermined time or longer, it is confirmed that the current floor environment is the second floor environment mode.

8. The mobile robot operation control method according to claim 7, wherein in the floor environment mode determining step, if it is confirmed that the current floor environment mode is the second floor environment mode, the second floor environment mode is determined as the final floor environment mode to set operation control of the mobile robot (10) corresponding to the second floor environment mode and in the operation control step, when the floor environment mode is determined as a second floor environment mode, the operation of the mobile robot (10) is controlled to increase driving forces of the main brush motor (210) and a cleaning suction motor (220) to be proportional to a floor resistance of the second floor environment mode and decrease the driving force of the movement motor (230) to be inversely proportional to the floor resistance of the second floor environment mode.

9. The mobile robot operation control method according to claim 4, wherein when in the floor environment mode identifying step, the currently set floor environment is a second floor environment, in the first determining step, if the first statistical feature value is lower than the first determination reference value and the second statistical feature value is lower than the second determination value, it is determined that the current floor environment is a first floor environment mode.

10. The mobile robot operation control method according to claim 9, wherein in the floor environment mode determining step, if the current floor environment mode is changed from the second floor environment mode to the first floor environment mode, the first floor environment mode is determined as the final floor environment mode to set operation control of the mobile robot (10) corresponding to the first floor environment mode.

11. An apparatus (100) for controlling an operation of a mobile robot (10) based on floor environment sensing, comprising:
a measured current value acquiring unit (110) which acquires a current value or a voltage value measured from a motor (210, 220, 230) which is equipped in a mobile robot (10) to operate;
a statistical feature value calculating unit (130) which calculates at least one statistical feature value based on the current value or the voltage value;
a floor environment sensing unit (140) which senses a final floor environment mode by comparing at least one statistical feature value and a predetermined determination reference value; and
an operation control unit (150) which controls an operation of the mobile robot (10) based on a sensing result of the final floor environment mode
**characterized in that**,
the statistical feature value calculating unit (130) further performs an operation of comparing a current statistical feature value according to a current operation routine of the mobile robot (10) and a past statistical feature value according to a past operation routine to predict an additional load applied to the main brush due to an additional factor independent from the floor environment and the statistical feature value calculating unit (130) calculates a statistical feature value by excluding an error according to the predicted additional load from the acquired current value or voltage value.

12. The mobile robot operation control apparatus (100) according to claim 11, wherein the measured current value acquiring unit (110) acquires the current value or the voltage value in accordance with the rotating operation of the main brush (510) from the motor (210) connected to a main brush (510) of the mobile robot (10) and the statistical feature value calculating unit (130) calculates a first statistic value by calculating an average of the current value or the voltage value acquired for a predetermined time (buffer) and a second statistic value by calculating a standard deviation of the current value or the voltage value acquired for the predetermined time (buffer).

13. The mobile robot operation control apparatus (100) according to claim 12, wherein the floor environment sensing unit (140) compares the first statistical feature value and the second statistical feature value with the first determination reference value and the second determination value, respectively, to sense one of the first floor environment mode and the second floor environment mode and the floor environment sensing unit (140) includes:
a floor environment mode identifying unit (142) which identifies a currently set floor environment mode during the operation of the mobile robot (10);
a first determining unit (144) which determines a current floor environment mode by comparing the first statistical feature value with the first determination reference value and comparing the second statistical feature value with the second determination value; and
a floor environment mode determining unit (148) which determines a final floor environment mode based on the determination result.

14. A mobile robot (10) which performs a cleaning operation based on floor environment sensing, comprising:
at least two main wheels;
a movement motor which generates a driving force to rotate the main wheels (540a, 540b);
a main brush (510) to which at least one blade is coupled;
a main brush motor (210) which rotates the main brush (510); and
a mobile robot operation control apparatus (100) according to claim 11 which acquires a current value or a voltage value measured from the main brush motor (210), calculates at least one feature value based on the acquired current value or voltage value, senses a final floor environment mode by comparing at least one statistical feature value and a predetermined determination reference value, and
transmits an operation control signal to at least one of the main brush motor (210) and the movement motor (230) based on the sensing result of the final floor environment mode to control the cleaning operation.

## Patentansprüche

1. Verfahren zum Steuern einer Betriebsart eines mobilen Roboters (10) basierend auf einem Abtasten der Bodenumgebung in einer Steuervorrichtung (100) für die Betriebsartsteuerung eines mobilen Roboters, umfassend:
einen Erfassungsschritt des Bestromungsmesswerts zum Erfassen eines Bestromungswerts oder eines Spannungswertes, der von einem Motor (210, 220, 230) gemessen wird, der in einem zu betreibenden mobilen Roboter (10) eingerichtet ist;
einen Berechnungsschritt des statistischen Merkmalswerts, zum Berechnen mindestens eines statistischen Merkmalswerts basierend auf dem Bestromungswert oder des Spannungswert;
einen Abtastungsschritt der Bodenumgebung zum Abtasten eines endgültigen Bodenumgebungsmodus durch Vergleichen mindestens eines statistischen Merkmalswerts und eines vorbestimmten Bestimmungsreferenzwerts; und
einen Steuerschritt der Betriebsart zum Steuern einer Betriebsart des mobilen Roboters (10) basierend auf einem Abtastungsergebnis des endgültigen Bodenumgebungsmodus,
**dadurch gekennzeichnet, dass**
in dem Berechnungsschritt des statistischen Merkmalswerts eine zusätzliche Beanspruchung, die auf die Hauptbürste (510) aufgrund eines zusätzlichen Faktors, der von der Bodenumgebung unabhängig ist, ausgeübt wird, vorhergesagt wird, durch Vergleichen eines aktuellen statistischen Merkmalswerts gemäß einer aktuellen Betriebsartroutine des mobilen Roboters (10) und eines vergangenen statistischen Merkmalswerts gemäß einer vergangenen Betriebsartroutine, und wobei ein statistischer Merkmalswert berechnet wird, durch Ausschließen eines Fehlers gemäß der vorhergesagten zusätzlichen Beanspruchung von dem erfassten Bestromungswert oder Spannungswert.

2. Betriebsartsteuerverfahren eines mobilen Roboters nach Anspruch 1, wobei in dem Erfassungsschritt des Bestromungsmesswerts der Bestromungswert oder der Spannungswert gemäß der Drehbetriebsart der Hauptbürste (510) von dem Motor (210) erfasst wird, der mit der Hauptbürste (510) des mobilen Roboters (10) verbunden ist.

3. Betriebsartsteuerverfahren eines mobilen Roboters nach Anspruch 2, wobei in dem Berechnungsschritt des statistischen Merkmalswerts ein erster statistischer Wert berechnet wird, durch Berechnen eines Durchschnitts des Bestromungswerts oder des Spannungswerts, der für eine vorbestimmte Zeit (Puffer) erfasst wird, und ein zweiter statistischer Wert berechnet wird, durch Berechnen einer Standardabweichung des Bestromungswerts oder des Spannungswerts, der für die vorbestimmte Zeit (Puffer) erfasst wird.

4. Betriebsartsteuerverfahren eines mobilen Roboters nach Anspruch 3, wobei in dem Abtastungsschritt der Bodenumgebung der erste statistische Merkmalswert und der zweite statistische Merkmalswert mit dem ersten Bestimmungsreferenzwert bzw. dem zweiten Bestimmungswert verglichen werden, um einen von dem ersten Bodenumgebungsmodus und dem zweiten Bodenumgebungsmodus abzutasten.

5. Betriebsartsteuerverfahren eines mobilen Roboters nach Anspruch 4, wobei der Abtastungsschritt der Bodenumgebung einschließt:
einen Identifizierungsschritt des Bodenumgebungsmodus zum Identifizieren eines aktuell eingestellten Bodenumgebungsmodus während der Betriebsart des mobilen Roboters (10);
einen ersten Bestimmungsschritt zum Bestimmen eines aktuellen Bodenumgebungsmodus durch Vergleichen des ersten statistischen Merkmalswertes mit dem ersten Bestimmungsreferenzwert und Vergleichen des zweiten statistischen Merkmalswertes mit dem zweiten Bestimmungswert; und einen Bestimmungsschritt des Bodenumgebungsmodus zum Bestimmen eines endgültigen Bodenumgebungsmodus basierend auf dem Bestimmungsergebnis.

6. Betriebsartsteuerverfahren eines mobilen Roboters nach Anspruch 4, wobei, wenn in dem Identifizierungsschritt des Bodenumgebungsmodus die aktuell eingestellte Bodenumgebung eine erste Bodenumgebung ist, in dem ersten Bestimmungsschritt, falls der erste statistische Merkmalswert gleich oder höher als der erste Bestimmungsreferenzwert ist und der zweite statistische Merkmalswert gleich oder höher als der zweite Bestimmungswert ist, bestimmt wird, dass die aktuelle Bodenumgebung ein zweiter Bodenumgebungsmodus ist.

7. Betriebsartsteuerverfahren eines mobilen Roboters nach Anspruch 1, ferner umfassend:
einen zweiten Bestimmungsschritt zum zusätzlichen Bestimmen des aktuellen Bodenumgebungsmodus basierend auf einer Zustandserhaltungszeit des zweiten Bodenumgebungsmodus, wenn die aktuelle Bodenumgebung als ein zweiter Bodenumgebungsmodus bestimmt wird, wobei in dem zweiten Bestimmungsschritt, falls bestimmt wird, dass der zweite Bodenumgebungsmodus für eine vorbestimmte Zeit oder länger erhalten wird, bestätigt wird, dass die aktuelle Bodenumgebung der zweite Bodenumgebungsmodus ist.

8. Betriebsartsteuerverfahren eines mobilen Roboters nach Anspruch 7, wobei in dem Bestimmungsschritt des Bodenumgebungsmodus, falls bestätigt wird, dass der aktuelle Bodenumgebungsmodus der zweite Bodenumgebungsmodus ist, der zweite Bodenumgebungsmodus als der endgültige Bodenumgebungsmodus bestimmt wird, um die Betriebsartsteuerung des mobilen Roboters (10) entsprechend dem zweiten Bodenumgebungsmodus einzustellen, und wobei in dem Steuerschritt der Betriebsart, wenn der Bodenumgebungsmodus als ein zweiter Bodenumgebungsmodus bestimmt wird, die Betriebsart des mobilen Roboters (10) gesteuert wird, um Antriebskräfte des Hauptbürstenmotors (210) und eines Reinigungssaugmotors (220) zu erhöhen, so dass sie proportional zu einem Bodenwiderstand des zweiten Bodenumgebungsmodus sind, und die Antriebskraft des Bewegungsmotors (230) zu verringern, so dass sie umgekehrt proportional zu dem Bodenwiderstand des zweiten Bodenumgebungsmodus ist.

9. Betriebsartsteuerverfahren eines mobilen Roboters nach Anspruch 4, wobei, wenn in dem Identifizierungsschritt des Bodenumgebungsmodus die aktuell eingestellte Bodenumgebung eine zweite Bodenumgebung ist, in dem ersten Bestimmungsschritt, falls der erste statistische Merkmalswert niedriger als der erste Bestimmungsreferenzwert ist und der zweite statistische Merkmalswert niedriger als der zweite Bestimmungswert ist, bestimmt wird, dass die aktuelle Bodenumgebung ein erster Bodenumgebungsmodus ist.

10. Betriebsartsteuerverfahren eines mobilen Roboters nach Anspruch 9, wobei in dem Bestimmungsschritt des Bodenumgebungsmodus, falls der aktuelle Bodenumgebungsmodus von dem zweiten Bodenumgebungsmodus zu dem ersten Bodenumgebungsmodus geändert wird, der erste Bodenumgebungsmodus als der endgültige Bodenumgebungsmodus bestimmt wird, um die Betriebsartsteuerung des mobilen Roboters (10) entsprechend dem ersten Bodenumgebungsmodus einzustellen.

11. Vorrichtung (100) zum Steuern einer Betriebsart eines mobilen Roboters (10) basierend auf der Abtastung der Bodenumgebung, umfassend:
eine Erfassungseinheit (110) des Bestromungsmesswerts, die einen Bestromungswert oder einen Spannungswert erfasst, der von einem Motor (210, 220, 230) gemessen wird, der in einem zu betreibenden mobilen Roboter (10) eingerichtet ist;
eine Berechnungseinheit (130) des statistischen Merkmalswerts, die mindestens einen statistischen Merkmalswert basierend auf dem Bestromungswert oder dem Spannungswert berechnet;
eine Abtastungseinheit (140) der Bodenumgebung, die einen endgültigen Bodenumgebungsmodus abtastet, durch Vergleichen mindestens eines statistischen Merkmalswerts und eines vorbestimmten Bestimmungsreferenzwert; und
eine Steuereinheit (150) der Betriebsart, die eine Betriebsart des mobilen Roboters (10) basierend auf einem Abtastungsergebnis des endgültigen Bodenumgebungsmodus steuert,
**dadurch gekennzeichnet, dass**
die Berechnungseinheit (130) des statistischen Merkmalswerts ferner eine Betriebsart des Vergleichens eines aktuellen statistischen Merkmalswerts gemäß einer aktuellen Betriebsartroutine des mobilen Roboters (10) und eines vergangenen statistischen Merkmalswerts gemäß einer vergangenen Betriebsroutine durchführt, um eine zusätzliche Beanspruchung vorherzusagen, die auf die Hauptbürste aufgrund eines zusätzlichen Faktors, der von der Bodenumgebung unabhängig ist, ausgeübt wird, und die Berechnungseinheit (130) des statistischen Merkmalswerts einen statistischen Merkmalswert berechnet, durch Ausschließen eines Fehler gemäß der vorhergesagten zusätzlichen Beanspruchung von dem erfassten Bestromungswert oder Spannungswert.

12. Betriebsartsteuervorrichtung (100) eines mobilen Roboters nach Anspruch 11, wobei die Erfassungseinheit (110) des Bestromungsmesswerts den Bestromungswert oder den Spannungswert gemäß der Drehbetriebsart der Hauptbürste (510) von dem Motor (210) erfasst, der mit einer Hauptbürste (510) des mobilen Roboters (10) verbunden ist, und die Berechnungseinheit (130) des statistischen Merkmalswerts einen ersten statistischen Wert durch Berechnen eines Durchschnitts des Bestromungswerts oder des Spannungswerts, der für eine vorbestimmte Zeit (Puffer) erfasst wird, und einen zweiten statistischen Wert durch Berechnen einer Standardabweichung des Bestromungswerts oder des Spannungswerts, der für die vorbestimmte Zeit (Puffer) erfasst wird, berechnet.

13. Betriebsartsteuervorrichtung (100) eines mobilen Roboters nach Anspruch 12, wobei die Abtastungseinheit (140) der Bodenumgebung den ersten statistischen Merkmalswert und den zweiten statistischen Merkmalswert mit dem ersten Bestimmungsreferenzwert bzw. dem zweiten Bestimmungswert vergleicht, um einen des ersten Bodenumgebungsmodus und des zweiten Bodenumgebungsmodus abzutasten, und wobei die Abtastungseinheit (140) der Bodenumgebung einschließt:
eine Identifizierungseinheit (142) des Bodenumgebungsmodus, die einen aktuell eingestellten Bodenumgebungsmodus während der Betriebsart des mobilen Roboters (10) identifiziert;
eine erste Bestimmungseinheit (144), die einen aktuellen Bodenumgebungsmodus bestimmt, durch Vergleichen des ersten statistischen Merkmalswerts mit dem ersten Bestimmungsreferenzwert und Vergleichen des zweiten statistischen Merkmalswerts mit dem zweiten Bestimmungswert; und
eine Bestimmungseinheit (148) des Bodenumgebungsmodus, die einen endgültigen Bodenumgebungsmodus basierend auf dem Bestimmungsergebnis bestimmt.

14. Mobiler Roboter (10), der einen Reinigungsbetriebsart basierend auf der Abtastung der Bodenumgebung durchführt, umfassend:
mindestens zwei Haupträder;
einen Bewegungsmotor, der eine Antriebskraft erzeugt, um die Haupträder (540a, 540b) zu drehen;
eine Hauptbürste (510), an die mindestens eine Klinge gekoppelt ist;
einen Hauptbürstenmotor (210), der die Hauptbürste (510) dreht; und
Betriebsartsteuervorrichtung (100) eines mobilen Roboters nach Anspruch 11, die einen Bestromungswert oder einen Spannungswert erfasst, der von dem Hauptbürstenmotor (210) gemessen wird, mindestens einen Merkmalswert basierend auf dem erfassten Bestromungswert oder Spannungswerts berechnet, einen endgültigen Bodenumgebungsmodus abtastet, durch Vergleichen mindestens eines statistischen Merkmalswerts und eines vorbestimmten Bestimmungsreferenzwerts, und
ein Betriebsartsteuersignal an mindestens einen des Hauptbürstenmotors (210) und des Bewegungsmotors (230) basierend auf dem Abtastungsergebnis des endgültigen Bodenumgebungsmodus überträgt, um die Reinigungsbetriebsart zu steuern.

## Revendications

1. Procédé de commande de fonctionnement d'un robot mobile (10) en fonction de la détection de l'environnement du sol dans un appareil de commande de fonctionnement d'un robot mobile (100), comprenant :
une étape d'acquisition de valeur de courant mesurée consistant à acquérir une valeur de courant ou une valeur de tension mesurée à partir d'un moteur (210, 220, 230) qui est prévu dans un robot mobile (10) pour fonctionner ;
une étape de calcul de valeur de caractéristique statistique consistant à calculer au moins une valeur de caractéristique statistique en fonction de la valeur de courant ou de la valeur de tension ;
une étape de détection d'environnement du sol consistant à détecter un mode d'environnement final du sol en comparant au moins une valeur de caractéristique statistique et une valeur de référence de détermination prédéterminée ; et
une étape de commande de fonctionnement consistant à commander un fonctionnement du robot mobile (10) en fonction d'un résultat de détection du mode d'environnement final du sol,
**caractérisé en ce que,**
dans l'étape de calcul de la valeur de caractéristique statistique, une charge supplémentaire appliquée à la brosse principale (510) en raison d'un facteur supplémentaire indépendant de l'environnement du sol est prédite en comparant une valeur de caractéristique statistique actuelle selon une routine de fonctionnement actuelle du robot mobile (10) et une valeur de caractéristique statistique passée selon une routine de fonctionnement passée, et une valeur de caractéristique statistique est calculée en excluant une erreur selon la charge supplémentaire prédite de la valeur de courant ou de la valeur de tension acquise.

2. Procédé de commande de fonctionnement de robot mobile selon la revendication 1, dans lequel dans l'étape d'acquisition de la valeur de courant mesurée, la valeur de courant ou la valeur de tension en fonction de l'opération de rotation de la brosse principale (510) est acquise à partir du moteur (210) relié à une brosse principale (510) du robot mobile (10)

3. Procédé de commande de fonctionnement de robot mobile selon la revendication 2, dans lequel dans l'étape de calcul de la valeur de caractéristique statistique, une première valeur statistique est calculée en calculant une moyenne de la valeur de courant ou de la valeur de tension acquise pendant un temps prédéterminé (tampon) et une seconde valeur statistique est calculée en calculant un écart type de la valeur de courant ou de la valeur de tension acquise pendant le temps prédéterminé (tampon).

4. Procédé de commande de fonctionnement de robot mobile selon la revendication 3, dans lequel, dans l'étape de détection d'environnement du sol, la première valeur de caractéristique statistique et la seconde valeur de caractéristique statistique sont comparées à la première valeur de référence de détermination et à la seconde valeur de détermination, respectivement, pour détecter l'un parmi le premier mode d'environnement du sol et le second mode d'environnement du sol.

5. Procédé de commande de fonctionnement de robot mobile selon la revendication 4, dans lequel l'étape de détection de l'environnement du sol comporte :
une étape d'identification de mode d'environnement du sol consistant à identifier un mode d'environnement du sol actuellement défini pendant le fonctionnement du robot mobile (10) ;
une première étape de détermination de mode d'environnement actuel du sol en comparant la première valeur de caractéristique statistique à la première valeur de référence de détermination et en comparant la seconde valeur de caractéristique statistique à la seconde valeur de détermination ; et une étape de détermination de mode d'environnement du sol consistant à déterminer un mode d'environnement final du sol en fonction du résultat de la détermination.

6. Procédé de commande de fonctionnement de robot mobile selon la revendication 4, dans lequel, lorsque dans l'étape d'identification du mode d'environnement du sol, l'environnement du sol actuellement défini est un premier environnement du sol, dans la première étape de détermination, si la première valeur de caractéristique statistique est égale ou supérieure à la première valeur de référence de détermination et la seconde valeur de caractéristique statistique est égale ou supérieure à la seconde valeur de détermination, il est déterminé que l'environnement actuel du sol est un second mode d'environnement du sol.

7. Procédé de commande de fonctionnement de robot mobile selon la revendication 1, comprenant en outre :
une seconde étape de détermination consistant à déterminer en outre le mode d'environnement actuel du sol en fonction d'une durée de maintien de l'état du second mode d'environnement du sol lorsque l'environnement actuel du sol est déterminé comme un second mode d'environnement du sol, dans lequel dans la seconde étape de détermination, s'il est déterminé que le second mode d'environnement du sol est maintenu pendant une durée prédéterminée ou plus longue, on confirme que l'environnement actuel du sol est le second mode d'environnement du sol.

8. Procédé de commande de fonctionnement de robot mobile selon la revendication 7, dans lequel dans l'étape de détermination de mode d'environnement du sol, si l'on confirme que le mode d'environnement actuel du sol est le second mode d'environnement du sol, le second mode d'environnement du sol est déterminé comme le mode d'environnement final du sol pour régler la commande de fonctionnement du robot mobile (10) correspondant au second mode d'environnement du sol et dans l'étape de commande de fonctionnement, lorsque le mode d'environnement du sol est déterminé comme étant un second mode d'environnement du sol, le fonctionnement du robot mobile (10) est commandé pour augmenter des forces d'entraînement du moteur de la brosse principale (210) et d'un moteur d'aspiration de nettoyage (220) afin qu'elles soient proportionnelles à la résistance du sol du second mode d'environnement du sol et pour diminuer la force d'entraînement du moteur de mouvement (230) afin qu'elle soit inversement proportionnelle à la résistance du sol du second mode d'environnement du sol.

9. Procédé de commande de fonctionnement de robot mobile selon la revendication 4, dans lequel lorsque dans l'étape d'identification de mode d'environnement du sol, l'environnement du sol actuellement défini est un second environnement du sol, dans la première étape de détermination, si la première valeur de caractéristique statistique est inférieure à la première valeur de référence de détermination et la seconde valeur de caractéristique statistique est inférieure à la seconde valeur de détermination, il est déterminé que l'environnement actuel du sol est un premier mode d'environnement du sol.

10. Procédé de commande de fonctionnement de robot mobile selon la revendication 9, dans lequel, dans l'étape de détermination de mode d'environnement du sol, si le mode d'environnement actuel du sol est modifié du second mode d'environnement du sol au premier mode d'environnement du sol, le premier mode d'environnement du sol est déterminé comme le mode d'environnement final du sol pour régler la commande de fonctionnement du robot mobile (10) correspondant au premier mode d'environnement du sol.

11. Appareil (100) de commande de fonctionnement d'un robot mobile (10) en fonction de la détection de l'environnement du sol, comprenant :
une unité d'acquisition de valeur de courant mesurée (110) qui acquiert une valeur de courant ou une valeur de tension mesurée à partir d'un moteur (210, 220, 230) qui est prévu dans un robot mobile (10) pour fonctionner ;
une unité de calcul de valeur de caractéristique statistique (130) qui calcule au moins une valeur de caractéristique statistique en fonction de la valeur de courant ou de la valeur de tension ;
une unité de détection d'environnement du sol (140) qui détecte un mode d'environnement final du sol en comparant au moins une valeur de caractéristique statistique et une valeur de référence de détermination prédéterminée ; et
une unité de commande de fonctionnement (150) qui commande le fonctionnement du robot mobile (10) en fonction d'un résultat de détection du mode d'environnement final du sol
**caractérisé en ce que,**
l'unité de calcul de valeur de caractéristique statistique (130) effectue en outre une opération consistant à comparer une valeur de caractéristique statistique actuelle selon une routine de fonctionnement actuelle du robot mobile (10) et une valeur de caractéristique statistique passée selon une routine de fonctionnement passée afin de prévoir une charge supplémentaire appliquée à la brosse principale en raison d'un facteur supplémentaire indépendant de l'environnement du sol et l'unité de calcul de valeur de caractéristique statistique (130) calcule une valeur de caractéristique statistique en excluant une erreur selon la charge supplémentaire prédite de la valeur de courant ou de la valeur de tension acquise.

12. Appareil de commande de fonctionnement de robot mobile (100) selon la revendication 11, dans lequel l'unité d'acquisition de la valeur de courant mesurée (110) acquiert la valeur de courant ou la valeur de tension en fonction de l'opération de rotation de la brosse principale (510) à partir du moteur (210) relié à une brosse principale (510) du robot mobile (10) et l'unité de calcul de valeur de caractéristique statistique (130) calcule une première valeur statistique en calculant une moyenne de la valeur de courant ou de la valeur de tension acquise pendant un temps prédéterminé (tampon) et une seconde valeur statistique en calculant un écart type de la valeur de courant ou de la valeur de tension acquise pendant le temps prédéterminé (tampon).

13. Appareil de commande de fonctionnement de robot mobile (100) selon la revendication 12, dans lequel l'unité de détection d'environnement du sol (140) compare la première valeur de caractéristique statistique et la seconde valeur de caractéristique statistique avec la première valeur de référence de détermination et la seconde valeur de détermination, respectivement, pour détecter l'un parmi le premier mode d'environnement du sol et le second mode d'environnement du sol, et l'unité de détection d'environnement du sol (140) comporte :
une unité d'identification du mode d'environnement du sol (142) qui identifie un mode d'environnement du sol actuellement défini pendant le fonctionnement du robot mobile (10) ;
une première unité de détermination (144) qui détermine un mode d'environnement actuel du sol en comparant la première valeur de caractéristique statistique à la première valeur de référence de détermination et en comparant la seconde valeur de caractéristique statistique à la seconde valeur de détermination ; et
une unité de détermination de mode d'environnement du sol (148) qui détermine un mode d'environnement final du sol en fonction du résultat de détermination.

14. Robot mobile (10) qui effectue une opération de nettoyage en fonction de la détection d'environnement du sol, comprenant :
au moins deux roues principales ;
un moteur de mouvement qui génère une force d'entraînement pour faire tourner les roues principales (540a, 540b) ;
une brosse principale (510) à laquelle au moins une lame est accouplée ;
un moteur de brosse principale (210) qui fait tourner la brosse principale (510) ; et
un appareil de commande de fonctionnement de robot mobile (100) selon la revendication 11, qui acquiert une valeur de courant ou une valeur de tension mesurée à partir du moteur de la brosse principale (210), calcule au moins une valeur de caractéristique en fonction de la valeur de courant ou de la valeur de tension acquise, détecte un mode d'environnement final du sol en comparant au moins une valeur de caractéristique statistique et une valeur de référence de détermination prédéterminée, et
transmet un signal de commande de fonctionnement à au moins l'un parmi le moteur de brosse principale (210) et le moteur de mouvement (230) en fonction du résultat de détection du mode d'environnement final du sol afin de commander l'opération de nettoyage.
